(19) Europäisches Patentamt
European Patent Office
Office européen des brevets

(11) **EP 4 156 110 A1**

(12) **EUROPEAN PATENT APPLICATION**
published in accordance with Art. 153(4) EPC

(43) Date of publication:
**29.03.2023 Bulletin 2023/13**

(21) Application number: **20742790.7**

(22) Date of filing: **22.05.2020**

(51) International Patent Classification (IPC):
***G06T 11/00*** (2006.01)

(52) Cooperative Patent Classification (CPC):
**G06T 11/001;** G06T 2207/20081; G06T 2207/20084

(86) International application number:
**PCT/ES2020/070336**

(87) International publication number:
**WO 2021/234190 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Desilico S.L.**
**28007 Madrid (ES)**

• **Seddi, Inc.**
**New York, NY 10016 (US)**

(72) Inventors:
• **GARCÉS, Elena**
**28007 Madrid (ES)**
• **RODRÍGUEZ-PARDO, Carlos**
**28007 Madrid (ES)**

(74) Representative: **Clarke Modet & Co.**
**C/ Suero de Quiñones 34-36**
**28002 Madrid (ES)**

(54) **GENERATING A MATERIAL PROPERTY MAP OF A COMPUTER MODEL OF A MATERIAL BASED ON A SET OF MICRO-SCALE IMAGES**

(57) According to various embodiments, a framework for transferring micro-scale properties of any kind (geometry, optical properties, material parameters resolution, etc.) of a material, to larger images of the same material is provided. The framework includes a machine learning model capable of learning to perform this transfer from a set of micro-scale images of one or more patches of the material and micro-scale properties of the material. The machine learning framework transfers the micro-scale properties to images of the same material, regardless of its size, resolution, illumination or geometry.

FIG. 1

**Description**

**BACKGROUND**

This disclosure generally relates to computer modeling systems, and more specifically to a system and method for micro-scale image capturing and modeling of visual properties of materials for use in visual computing applications.

In visual computing applications, like computer graphics, the accurate and life-like modeling of materials, such as fabrics, woods, papers, and other similar materials made of a microstructures, like fibers, has been a long-standing goal, and a key component for realistic animations in video games, films, and other computer-modeling applications. For example, materials like fabrics were traditionally modeled as two-dimensional sheets of very thin composition. Models for simulation of different materials typically focused on the appearance of the surface or surfaces of the two-dimensional sheet model. However, these models lacked detail and realism, particularly when examining up close or in scenes or other vignettes where the material was displayed close to the viewer. For example, in avatar-based online shopping applications, an avatar models items of clothing for a consumer who is trying to make a purchase decision. In such applications, the detail and realistic appearance of the clothing is critical. A sweater made of thick wool yarn cannot be accurately modeled in the surface of a two-dimensional sheet. With the recognition of these shortcomings, more recently, new approaches have developed for more realistic 3-dimensional modeling of materials, like cloth or fabrics.

However, these newer modeling approaches require detailed information about the characteristics of the modeled material. To obtain this information, optical capturing systems are needed for accurately extracting the geometric and optical properties of materials that allow the modeling of the appearance of those materials under any lighting condition. But many real-world materials present characteristics that can only be measured at a certain scale. Such is the case of many optical phenomena that occur in surfaced materials, where micro-scale details that cannot be measured using standard cameras contribute significantly to the overall appearance of the material. Capturing those details that happen at a micro-scale has several technical and scientific applications, like surface parameter estimation or digital material editing.

Most existing devices are targeted to capture generic surface-like materials at a millimeter scale, usually focused in extracting the surface normals and its reflectance, the latest in the form of a Bidirectional Reflectance Distribution Function (BRDF) that can be spatially varying (SV-BRDF). For example, a common way of capturing micro-scale details of materials is through imaging devices, which take pictures under controlled conditions to measure different phenomena of the material. For this, digital cameras are used to capture images from multiple viewing and lighting directions covering the hemisphere centered in the normal of the material surface or from a single fixed view but using multiple luminaires. These approaches can be used to obtain the SV-BRDF or the Bidirectional Reflectance Distribution Functions (BTF). Other approaches, such as the one described in PCT/ES2019/000016 titled "Micro Scale Image Capture System," allow reaching very fine resolutions at the fiber level and are capable to extract geometric and optical properties for use in realistic rendering context, for instance in the case of realistic fabrics or other materials. Other approaches to capturing material characteristics for computer modeling include systems to for example derive volumetric models of fabrics employ X-ray computed tomography (CT) scans or microscope-based optical systems to capture the material's parameters.

These micro-scale systems operate on material samples at very small scale with very high resolution in order to obtain properties that are only ascertainable at that micro-scale. For example, the diameter range for natural fibers commonly found in fabrics and other materials is between 10 and 50 micrometers. By way of example, cotton fibers range between 16 and 20 micrometers, flax fibers range between 12 to 16 micrometers, wool fibers are typically between 10 and 50 micrometers, and silk fibers are between about 10-12 micrometers. To capture properties of materials due to these microstructures, digital microscopic optical systems are used. In this sense, the resolution of these optical systems is measured as the smallest distance between two points on an image that can still be distinguished in the image pixels as two separate entities ($R = \lambda / 2NA$), where NA is the numerical aperture of the lens used and $\lambda$ is the size of the wavelength of the light used to capture the image. Thus, micro-scale resolutions of optical systems capable of capturing these micro-scale properties are in the 1.5 to 2.0 microns per pixel range. However, for computer modeling applications, rendering systems cannot function with such small scale image samples. Graphics rendering systems require a minimum image scale for any renderable material in order to efficiently apply textures to computer generated graphics of the material. For example, renderable-scale images typically have a maximum resolution of about 17 microns per pixel. This resolution is in part given by the fact that humans can typically focus as close as about 100 mm away from their eyes and at that distance, the average maximal acuity of 1 MAR, corresponds to the smallest visible size to be about 29 microns. Thus, a human cannot see the microstructure of materials with the naked eye. Thus, in computer graphics applications, such as virtual reality, gaming, or other real-time rendering applications, rendering systems do not require texture maps for images with parameters at micro-scale levels since they are not visible by the typical human eye.

However, for examination of samples of materials at these larger renderable scales, in the few millimeter to centimeter range, some of these micro-scale systems are deficient and they all require a significant amount of time to perform an inspection or capture of the key parameters of a given material sample. Doing that capture process from large patches of a material can be expensive and burdensome, as it may be necessary to capture individually every small patch in the material.

Texture maps for these material sample images are typically human-generated, using largely manual processes. And while the current micro-scale optical systems can derive material parameters that can be used in generating these renderable scale texture maps, there is no current approach to automatically transfer the properties of materials obtained at the micro-scale level to the texture maps of renderable scale images of the material. A prior approach to integrating information of images taken at a micro-scale with images captured at a macro-scale was proposed for its use in biomedical imaging applications, in [Kamen et al. 2013]. However, this approach does not learn a mapping from the micro-scale images that can be used for macro images.

Other methods that tackle similar problems to those solved by the present invention, include image domain adaptation, guided super-resolution, material parameter estimation, and edit propagation. For example, convolutional neural networks (CNNs) have been used for solving data-driven problems, and have proven to be particularly useful in computer vision applications, including image classification, segmentation and generation. A particular use-case of convolutional neural networks is image-to-image translation, in which the input image that the network receives is transformed to an image of an- another domain [Isola et al. 2017; Lee et al. 2018; Lin et al. 2018]; *see also* [Wang and Deng 2018]. CNNs have also shown success in problems of guided super-resolution. In them, a high-resolution image is used as a guidance to perform a learned up-sampling operation to a low-resolution image [Ni et al. 2017; Riegler et al. 2016]. These setups are typically designed for improving the quality of the images taken by expensive capture devices (e.g. depth cameras) using higher-resolution images taken by low cost devices, such an standard smartphone camera. Further, learning to estimate SVBRDF parameters from a data-set using CNNs has been a topic of interest in the literature. Typically, the neural network learns to estimate SVBRDF parameters given images of a pre-defined dataset, and hallucinates the parameters for unseen images. *See* [Deschaintre et al. 2019; Gao et al. 2019]. Lastly, the use of the information that is only available in a small patch of one image to extrapolate to the rest of the image has been studied in computer vision, particularly for edit propagation problems. In them, a user provides user strokes in a part of the image, and an algorithm must learn to propagate those strokes to the rest of the image [Endo et al. 2016]. However, none of these approaches provide a learned mapping from micro-scale images that can be used for macro images to transfer relevant image parameters.

Thus, what is needed is a system and method to automatically and efficiently transfer micro-scale optical imaging parameters of a material sample to texture maps of larger-scale renderable image samples of the material addressing the deficiencies of the prior art.

## BRIEF SUMMARY

According to various embodiments of the present invention, an artificial intelligence framework capable of learning to transfer micro-scale details of one material to unseen, larger images of the same material is provided. This unique framework is agnostic to the application it may be used for, the type of micro-scale image details that can be transferred, to the approach used to obtain those details, as well as to the way in which larger images of the material are captured. As opposed to existing methods that hallucinate the values of parameters of unseen materials using a data-set of pre-captured materials, methods according to the present invention can be physically based and all the extrapolation can be performed based on real values from the same material, thus making predictions more accurate and realistic.

In some embodiments, a method and system for generating a material property map of a computer model of a material for visual computing applications includes training a machine learning module with a set of micro-scale images of a subsection of a material sample captured under a plurality of different illumination conditions and with a set of one or more micro-scale parameters of the material. In these embodiments, the training may generate a mapping between a set of image features in the set of micro-scale images and a set of micro-level parameters of the material. One or more render-scale images of the material sample are then input and processed with the machine learning module to apply the one or more micro-level parameters to the render-scale images of the material sample. The micro-level parameters of the render-scale image of the material sample are then output to generate a property map of the material. The micro-scale at which the micro-scale images are captured according to these embodiments corresponds to a scale with a higher resolution than the render-scale at which the one or more render-scale images are captured.

In some embodiments, the method may additionally include capturing the set of micro-scale images with a micro-scale image capturing system with a plurality of controllable light sources. The micro-scale image capturing system can include polarizing filters for the plurality of controllable light sources and may also include a computer vision camera for capturing the set of micro-scale images. The micro-scale image capturing system can also include a polarizing filter for the computer vision camera for capturing micro-scale images of the set of micro-scale images with orthogonal polarizations.

According to some embodiments, a micro-scale material-property map can include the set of micro-scale parameters of the material and the set of micro-scale images of the subsection of a material sample. In these embodiments, the machine learning module is trained with the micro-scale material-property map.

In some embodiments the method can include computing the set of one or more micro-scale parameters of the material. The micro-scale parameters of the materials can include at least one of fly-outs, fiber twist, normal maps, warp/weft yarn labeling, yarn segmentation, or SVBRDF model parameters.

According to some embodiments the method can additionally include augmenting the set of micro-scale images by processing the set of micro-scale images to derive an augmented set of micro-scale images. The augmented set of micro-scale images include additional image features different from the set of image features. In these embodiments, the training of the machine learning module is performed with the augmented set of micro-scale images. According to some embodiments the method can additionally include augmenting the set of micro-scale parameters of the material by processing the set of micro-scale parameters to derive an augmented set of micro-scale parameters. The augmented set of a set of one or more micro-scale parameters of the material including additional micro-scale parameters different from the set of one or more micro-scale parameters of the material; and wherein the training of the machine learning module is performed with the augmented set of a set of micro-scale parameters of the material.

Systems and methods according to embodiments can implement the machine learning module with a convolutional neural network, which in some embodiments may include an encoder and a decoder.

Further, according to aspects of some embodiments, the resolution of the scale that corresponds to the micro-scale at which the micro-scale images are captured can be 30 microns or less per pixel.

In some embodiments, the material may be a fabric, such as for example, cotton, flax, wool, polyester, or silk. In these embodiments, the set of micro-scale parameters of the fabric can include fly-outs, fiber twist, normal maps, warp/weft yarn labeling, yarn segmentation, or SVBRDF model parameters.

## BRIEF DESCRIPTION OF THE SEVERAL VIEWS OF THE DRAWINGS

FIG. 1 is a diagram that illustrates a machine learning framework for generation of computer models of real materials according to embodiments.

FIG. 2 is a flow chart that illustrates a method for transferring micro-scale parameters to a renderable-scale image of a material sample according to embodiments.

FIG. 3 is a flow chart that illustrates a method for transferring micro-scale parameters to a renderable-scale image of a material sample according to embodiments.

FIG. 4 is a flow chart that illustrates a method for transferring micro-scale parameters to a renderable-scale image of a material sample using augmentation operations according to embodiments.

FIG. 5 is a block diagram illustrating a microscopic image acquisition system according to embodiments.

FIG. 6 is a flow chart that illustrates a method for a machine-learning based micro-scale parameter transfer according to embodiments.

FIG. 7 is an image that illustrates a computed albedo map and normal map of a denim fabric according to one embodiment.

FIG. 8 is an image that illustrates the optimization of SBRD parameters for a sample denim fabric material according to embodiments.

FIG. 9 is a block diagram that illustrates an overview of a texture transfer process according to embodiments.

FIG. 10 is a block diagram that illustrates an overview of a segmentation transfer process according to embodiments.

The figures depict various example embodiments of the present disclosure for purposes of illustration only. One of ordinary skill in the art will readily recognize form the following discussion that other example embodiments based on alternative structures and methods may be implemented without departing from the principles of this disclosure and which are encompassed within the scope of this disclosure.

## DETAILED DESCRIPTION

The above and other needs are met by the disclosed methods, a non-transitory computer-readable storage medium storing executable code, and systems for optical capture of geometric and optical properties of materials for use modeling of materials in visual computer applications, including, for example, garment design and virtual modeling, motion capture applications, biomechanics and ergonomics design and simulation, education, business, virtual and augmented reality shopping, and entertainment applications, including animation and computer graphics for digital movies, interactive gaming and videos, human, animal, or character simulations, virtual and augmented reality applications, robotics, computer vision, classification and recognition applications, and the like.

The Figures and the following description describe certain embodiments by way of illustration only. One of ordinary skill in the art will readily recognize from the following description that alternative embodiments of the structures and methods illustrated herein may be employed without departing from the principles described herein. Reference will now be made in detail to several embodiments, examples of which are illustrated in the accompanying figures.

Many real-world materials exhibit spatial regularities that can be exploited so that it is only necessary to capture the micro-geometry of a small set of patches of the material to fully understand its properties.

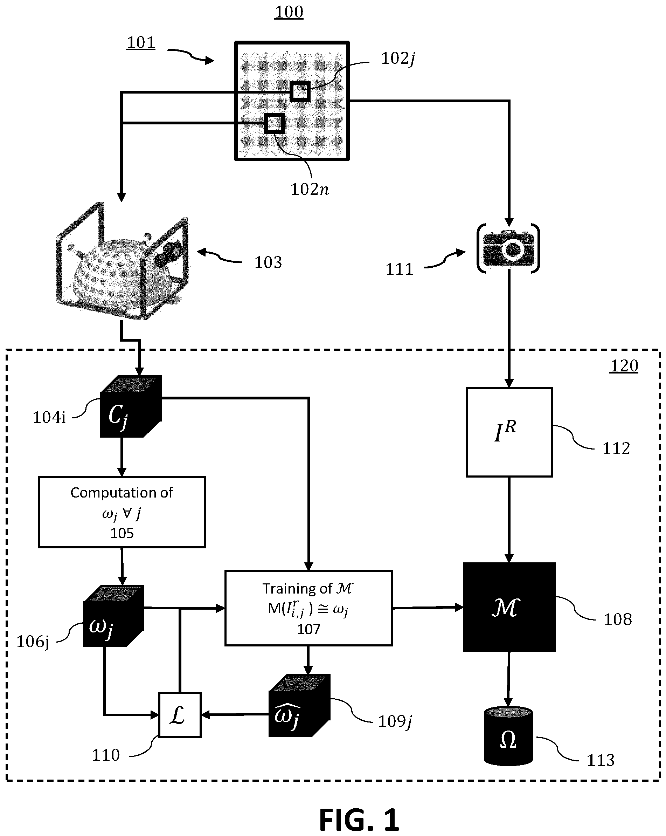

Now referring to FIG. 1, a machine learning framework for generation of computer models of real materials is illustrated according to one embodiment. The framework 100 may provide a computer usable model of a material for computer graphics applications. A physical sample of the material 101 is used to measure and determine any of its properties that can be used in the computer model to realistically model the material with computers. For example, micro-scale details of the material use for computer modeling to generate property maps of materials can include without limitation: color editing; saliency, displacement, depth, normals, tangents, transmittance or alpha maps; key point or edge detection; semantic segmentation information; Cook-Torrance or Disney parameters; and fly-away fibers, to name a few. Property maps according to embodiments of this disclosure are similar to texture maps but may include additional properties of the material that conventional texture maps do not include, such as, for example, yarn segmentation, yarn warp/weft labeling, woven/knit structure, fly-outs, and fiber twist.

In one embodiment, the framework includes a micro-scale capture device 103 with S light sources to sample a small patch 102 of the material sample 101. It should be noted that any type of capture device capable of providing sufficient micro-scale detail with different lighting conditions may be used. The micro-scale capture device 103 is used to capture a set of microscopic images $C_j = \{ I^r_{i,j} \}$ of a patch 102$j$ of the material. In this embodiment, each image $I^r_{i,j}$ is illuminated by a different light source $i \in S$. With the set of micro-scale images 104i, a parameter computation module 105 computes from each patch 102$j$, a set of $P$ parameters 106$j$ $\omega_{p,j}, \forall p \in P$. Each parameter $\omega_{p,j}$ can be any type of micro-level parameter, from for example a one-channel image ( $\omega_{p,j} \in \Re^2$ ), as in a segmentation mask, to a multi-channel image ( $\omega_{p,j} \in \Re^3$ ), as in a standard colored albedo.

The framework 100 includes a machine learning system 120, which receives as input the captured micro-scale $C_j$ 104i and a higher scale $I^R$ 112 images, which may be captured by any kind of capture device appropriate for each type of image. In embodiments of the machine learning system 120, a machine learning training module 107 is used to learn a mapping $\mathcal{M}$ between $C_j$ and $\omega_j$ in a way that generalizes to the images $I^R$ 112 of the same material, of any size and taken under any illumination conditions. For example, in some embodiments, a regular camera 111 is used to capture one or more images of the material sample 101 with a single light source. It should be noted that if one patch $j$ is not representative enough of all the micro-scale details of the material sample 101, multiple patches $j = (1, ..., n)$ can be captured, so as to improve the quality of the mapping $\mathcal{M}$. For example, patches 102$j$ in areas with different colors, textures, or the like, in the material sample can be imaged to produce the microscopic images $C_j = \{ I^r_{i,j} \}$ 104i with any number of 102$j$ patches, $j = (1, ..., n)$. This creates a set of micro-scale captures $C$.

In embodiments of the machine learning system 120, a machine learning module 108 applies the learned mapping $\mathcal{M}$ to estimate the parameters 113 S2 of any image 112 $I^R$ of the material at a higher or renderable scale, including for example, among others parameters, normal, specular and roughness maps. According to embodiments, the model $\mathcal{M}$ with the learned mapping from a set of micro-scale captures 104i ( $I^r_{i,j}$ ) can be fitted to the parameters at that renderable scale according to the following equations:

$$\mathcal{M}(I^R) = \Omega \qquad \text{[Eq. 1]}$$

$$s.t.\, \mathcal{M}\left(I^r_{i,j}\right) \cong \omega \quad \forall i \in S \text{ and } \forall j \in C \qquad \text{[Eq. 2]}$$

In embodiments of the machine learning system 120, a machine learning module 108 applies a learned mapping $\mathcal{M}$ to an input image $I^R$ 112 of a large patch of a material 101 to output an estimation of its relevant parameters 113 $\Omega$. Notably, previous approaches that learn only from individual pixels, without accounting for neighborhood information, are likely to fail because individual pixels do not contain enough information about the micro-scale details of the material 101 to provide accurate estimates for the parameters 106 $\omega$. Single-image estimation of many micro-scale parameters, such as SVBRDF maps, is an ill-posed problem as many different combinations of parameters may yield the same results. According to aspects of these embodiments, convolutional neural networks are used in the machine learning module 108. Convolutional neural networks (CNNs) have shown success in image classification, segmentation and generation problems, in part due to their effectiveness at integrating spatial information, thanks to their larger receptive fields. In particular, encoder-decoder convolutional neural network architectures have shown success at domain adaptation problems. This kind of deep learning architecture combines an encoder, which projects the images to a latent space with a small number of variables, and a decoder, which transforms that latent space into the desired domain. In some embodiments, skip connections between layers are added to increase the visual quality of the outputs by preserving local information. For example, in one embodiment, the U-net architecture is implemented in the machine learning module 108. This architecture provides a fully convolutional network capable of providing results to image-to-image translation problems.

According to aspects of the learning module 107 in various embodiments, a number of micro-scale images 104i ( $C_j = \{I_{i,j}^r\}$ ) of the material 101 under different lighting conditions enables the association of the same set of parameters 106j ($\omega_j$) with those images 104i, which share pixel-wise correspondence with each other. This creates a data-set, ( $C_j = \{I_{i,j}^r\}$ ), with many redundancies that are exploited to find the mapping between pictures of a material $j$ and its associated $\omega_j$, by training an illumination-invariant machine learning module 108. This module provides a mapping $\mathcal{M}$ that generalizes to unseen images 112 ($I^R$) of the same material at a renderable scale taken in any kind of lighting conditions. According to some embodiments, a neural network is trained to transfer multiple sets of micro-scale parameters $\omega_j$ of a material to unseen macro-scale or renderable size patches of the same material 101, by using only a data-set composed of images 112 of that same material.

According to some aspects of various embodiments, the training process in training module 107 includes feeding a neural network $\mathcal{M}$ with random crops of batches of randomly chosen input micro-scale images 104i $I_{i,j}^r$ . For each image 104i $I_{i,j}^r$ , the network must estimate the whole set of parameters 109j $\hat{\omega}_{p,j}, \forall p \in P$. According to embodiments, the neural network $\mathcal{M}$ learns to minimize an overall error 110 $\mathcal{L}$, which is the weighted sum of the difference $\mathcal{L}_p$ (e.g. $\ell_2$ norm) between predicted parameters 109j $\hat{\omega}_{p,j}$ and ground truth parameters 106j $\omega_{p,j}$:

$$\mathcal{L} = \sum_{p \in P} \mathcal{L}_p \times \lambda_p \qquad [\text{Eq. 3}]$$

According to various embodiments, the machine learning module 108 includes a neural network $\mathcal{M}$ that is trained with training module 107. In embodiments, the neural network $\mathcal{M}$ is designed without adding randomness to the output or the network itself. Some image-to-image translation deep learning architectures require addition of randomness because they are designed to solve multi-modal translation problems. That is, given the same input image, the network is able to generate multiple different output images. However, in some embodiments, the deep learning architecture of neural network $\mathcal{M}$ is optimized for a unimodal operation, that is, each image 104i $I_{i,j}^r$ is mapped only to one $\omega_j$. Thus, addition of randomness to the output or the network is unnecessary. Furthermore, while some neural networks require or can benefit from the use of adversarial networks to enhance their loss function, in some embodiments, the loss function used in the neural network $\mathcal{M}$ is rich enough to solve the parameter transfer problem without the need to add adversarial networks. Thus, while in different embodiments neural network $\mathcal{M}$ may rely on addition of randomness and/or adversarial networks, in more efficient embodiments these techniques are not required. This is particularly beneficial for embodiments in which a neural network is specifically trained for every material for which a model is generated. In these embodiments, the neural network $\mathcal{M}$ can be implemented with a U-net architecture of limited size. For example, in embodiments, a shallow 4-layer U-net network is used, with a small number of trainable parameters. This allows for a faster training, as well as reduced memory usage. This size limitation is also beneficial in inference time. As it is a fully-convolutional network, the U-net network can receive inputs of arbitrary sizes for some applications.

In accordance with an exemplary embodiment of a machine-learning transfer framework, a PyTorch deep learning framework is used. In this embodiment, a neural network $\mathcal{M}$ is trained using Adam [Kingma and Ba 2014], with a batch size of 10, a learning rate of $10^{-3}$ and a batch normalization operation after each non-linear activation layer.

For input normalization purposes, the mean and variance of all the maps in $\omega_j$, as well as one anchor image in $I_{i,j}^r$ are computed. The inputs of the network are standardized using the standardization parameters of the anchor image, and the outputs are standardized using their own standardization parameters. Using this approach, in this embodiment, the neural network $\mathcal{M}$ receives standardized inputs and learns to output 0-mean unit-variance images. This standardization procedure makes the neural network $\mathcal{M}$ invariant to global color intensities, as it only learns deviations with respect to the pre-computed mean intensities. This approach can be used to improve the network function in inference time, as the input image 112 may not be calibrated in the same way or have the same light intensities as the images present in the training dataset 104i. In this embodiment, the neural network $\mathcal{M}$ may be trained for example for 1000 iterations but an evaluation or test dataset is not created so as to maximize the data used for training. In other embodiments a different number of iterations may be used and evaluation or test datasets can be generated. In this embodiment, every map is typically weighted equally in the loss function: $\lambda_i = \lambda_j \ \forall \ i, j \in P$. According to this embodiment, when estimating the parameters $\Omega$ of an unseen image $I^R$, the neural network $\mathcal{M}$ that had the smallest $\mathcal{L}$ in training time is used. The unseen image $I^R$ is standardized using its own mean and variances, and the output of the network is then de-standardized using the $\omega_{p,j}$ standardization parameters. The batch normalization operation is not performed during the evaluation phase. The estimated $\Omega_p$ maps will consequently have approximately the same mean and variance as their original counterparts $\omega_p$.

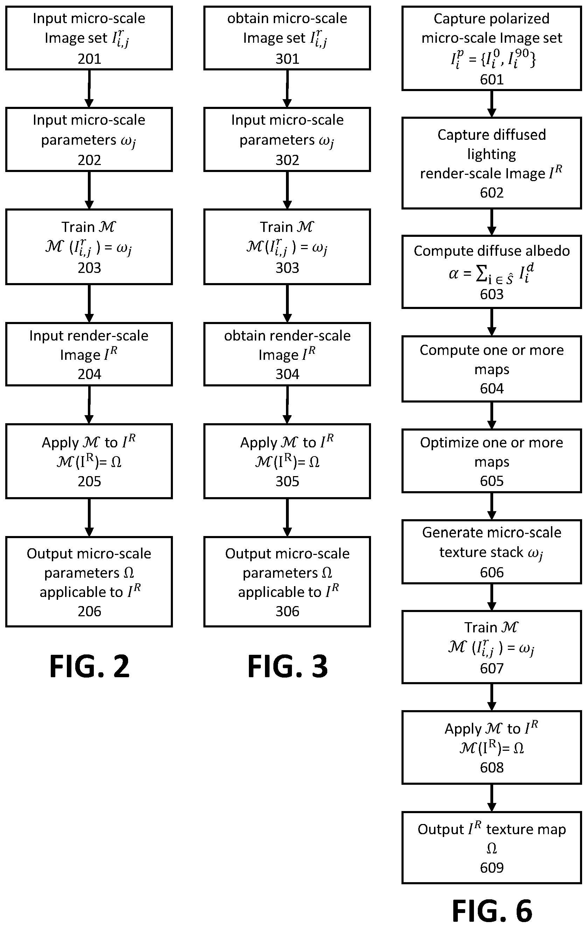

Now referring to FIG. 2, a method for transferring micro-scale parameters to a renderable-scale image of a material sample is provided according to embodiments. A micro-scale image set $I_{i,j}^r$ is input 201. Any approach may be used to capture the micro-scale images. In addition, a set of micro-scale parameters $\omega_j$ of the material is also input 202. Note that these sets can include data for any number micro-scale patches $j$ of the material sample. The inputs are used to train 203 a neural network $\mathcal{M}$, for example, according to Equation 2. One or more renderable-scale images $I^R$ are input 204. Once the neural network $\mathcal{M}$ has been trained 203, it is applied 205 $\mathcal{M}(I^R) = \Omega$ to the renderable-scale images $I^R$ to transfer the micro-scale parameters to the renderable-scale images $I^R$ as the material parameters $\Omega$. The material parameters S2 are then output 206. For example, the material parameters S2 are used to generate a property map associated with the renderable-scale image of the material, such as for example, a texture map.

Now referring to FIG. 3, a method for transferring micro-scale parameters to a renderable-scale image of a material sample is provided according to embodiments. A micro-scale image set $I_{i,j}^r$ is obtained 301. For example, a micro-scale camera-based system with multiple illumination sources is used to sample one or more patches of a material sample. In addition, a set of micro-scale parameters $\omega_j$ of the material is also input 302. Note that these sets can include data for any number micro-scale patches $j$ of the material sample. The inputs are used to train 303 a neural network $\mathcal{M}$, for example, according to Equation 2. One or more renderable-scale images $I^R$ are input 304. Once the neural network $\mathcal{M}$ has been trained 303, it is applied 305 $\mathcal{M}(I^R) = \Omega$ to the renderable-scale images $I^R$ to transfer the micro-scale parameters to the renderable-scale images $I^R$ as the material parameters $\Omega$. The material parameters S2 are then output 306. For example, the material parameters S2 are used to generate a property map associated with the renderable-scale image of the material. Referring back to FIG. 1, according to another aspect of the learning process according to some embodiments, the training module 107 includes a data augmentation process for training the neural networks. In these embodiments, to provide the network with more training data that can be used to make the micro-scale parameter transfer invariant to various properties of the input image $I^R$, such as for example, color, illumination, spatial resolution, or the like, data augmentation operations can be provided. It is worth noting that embodiments having an input set of micro-scale images 104i as multiple color images under different illumination sources already provides good performance for generalizing the micro-scale parameters 106j to new, unseen, images 112 with different potential illumination setups. However, a data augmentation process can further enhance the parameter transfer robustness to variations in the renderable-scale input images 112.

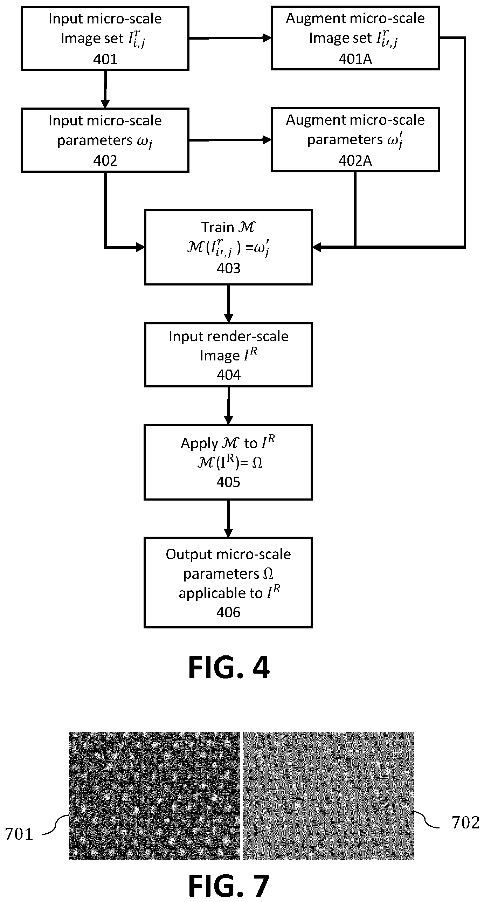

According to some embodiments, the augmentation operations can include any form of augmentation of the input sets of images 104i or parameters 106j used for training. Some embodiments do not implement any augmentation, some embodiments implement a subset of augmentation operations, while other embodiments implement all the augmentation operations. The selection of augmentation operations to implement are left to the implementer depending on the intended application. For example, referring to FIG. 4, a method for transferring micro-scale parameters to a renderable-scale image of a material sample using augmentation operations is provided according to some embodiments.

A micro-scale image set $I^r_{i,j}$ is input 401. Any approach may be used to capture the micro-scale images. The set of micro-scale images $I^r_{i,j}$ are then agumeted 401A to an augmented micro-scale image set $I^r_{i',j}$ ($i'$ = x*$i$) by applying one or more augmentation operations. For each input image $i$ any number of additional images x can be added to the augmented set for each augmentation operation. In addition, a set of micro-scale parameters $\omega_j$ of the material is also input 402. The set of micro-scale parameters $\omega_j$ is also augmented 402A to an augmented micro-scale parameter set $\omega'_j$ by applying one or more augmentation operations. For each parameter $\omega_j$ any number of augmented parameters $\omega'_j$ can be added to the augmented set for each augmentation operation. The augmented micro-scale image set $I^r_{i',j}$ and the augmented micro-scale parameter set $\omega'_j$ are used to train 403 a neural network $\mathcal{M}$, for example, according to Equation 2. Note that these sets can include data for any number micro-scale patches $j$ of the material sample. One or more renderable-scale images $I^R$ are input 404. Once the neural network $\mathcal{M}$ has been trained 403, it is applied 405 $\mathcal{M}(I^R) = \Omega$ to the renderable-scale images $I^R$ to transfer the micro-scale parameters to the renderable-scale images $I^R$ as the material parameters $\Omega$. The material parameters S2 are then output 506. For example, the material parameters S2 are used to generate a property map associated with the renderable-scale image of the material.

According to some embodiments, any type of augmentation operations can be used to augment the input data set for training. For example, one augmentation operation includes random rescaling of the input images 104i. According to one embodiment, the micro-scale details that are captured in the parameter estimation process 105 may not have the same scale in the image 112 of the material sample 101 for which the parameters 113 S2 are to be generated. The reason for this difference is not pertinent to the solution but may be due to perspective differences, misalignments, or due to random variations in the material sample 101. To tackle this issue, during training of the neural network $\mathcal{M}$, the training module 107 randomly rescales the set of input images 104 $I^r_{i,j}$ and the set of parameters 106 $\omega_j$ to provide an augmented set of input images and an augmented set of input parameters for training the neural network $\mathcal{M}$ so as to make $\mathcal{M}$ scale-invariant.

As another example, another augmentation operation can include random color variations. Even if the micro-structure of the material 101 is relatively homogeneous and can be estimated using only a small patch $j$, it may not be possible for the neural network $\mathcal{M}$ to estimate this micro-structure for parts of the material with previously unseen colors. This can be easily solved by randomly permuting the input color channels of the input images 104 $I^r_{i,j}$. The training module 107 randomly changes the values of the color channels in the set of input images 104 $I^r_{i,j}$ to provide an augmented set of input images, for example, same image with two or more added variants with randomly permutated color channels, for training the neural network $\mathcal{M}$ so as to make $\mathcal{M}$ color-invariant.

As yet another example, the augmentation operations can include random cropping of input images 104. During training, the training module 107 feeds the neural network $\mathcal{M}$ with small images 104 $I^r_{i,j}$ from randomly selected patches 102 of the material sample 101. According to some embodiments, the training module 107 can randomly crop the input images 104 $I^r_{i,j}$ to provide an augmented set of input images, for example, same image with two or more added variants with randomly cropped sections of the original image, for training the neural network $\mathcal{M}$ so as to make $\mathcal{M}$ size-invariant. In embodiments, the augmentation operations can be combined, for example, by applying the random crop augmentation already augmented images sets, for example, randomly illuminated, randomly rescaled and/or randomly colored augmented image sets. Using some or all of these or other augmentation operations in the training process provides a considerable amount of variations of the same material in the input training data for the neural network $\mathcal{M}$, thus making the parameter transfer process more robust and as generalized as possible.

Embodiments of a micro-scale parameter transfer framework according to this disclosure has many applications, including the estimation of render parameters, micro-geometry details or image segmentation masks. By way of example, some specific implementation embodiments are provided below.

**Property Maps Estimation Embodiment**

In one embodiment, a physically-based Spatially Varying Bidirectional Reflectance Distribution Function ("SV-BRDF") estimation is provided. According to this embodiment, a method to estimate the spatially-varying BRDF parameters of a planar material from a set of micro and macroscopic image captures of the material is provided. As opposed to existing methods that hallucinate the values of the parameters using a data-set of captured materials and a learning-based formulation, the methods according to this embodiment are physically based, and supervised using only the data captured and the estimated parameters for the material.

According to this embodiments, high-resolution information of small patches of the material captured at micro-scale are combined to feed a machine learning module that is able to extrapolate, or transfer, these parameters to a bigger patch of the material. A regression model of the machine learning module is trained using a scale-invariant approach, which allows the bigger patch image of the material to have any size, pixel resolution, and can be captured with any illumination or device. According to embodiments, data obtained from an optical capture machine illustrates the operation of this framework for SVBRDFs defined by four different sets of parameters: albedo, specular, roughness, and normal maps. However, the use of four parameters is purely for illustration as any number of parameters may be used in other embodiments.

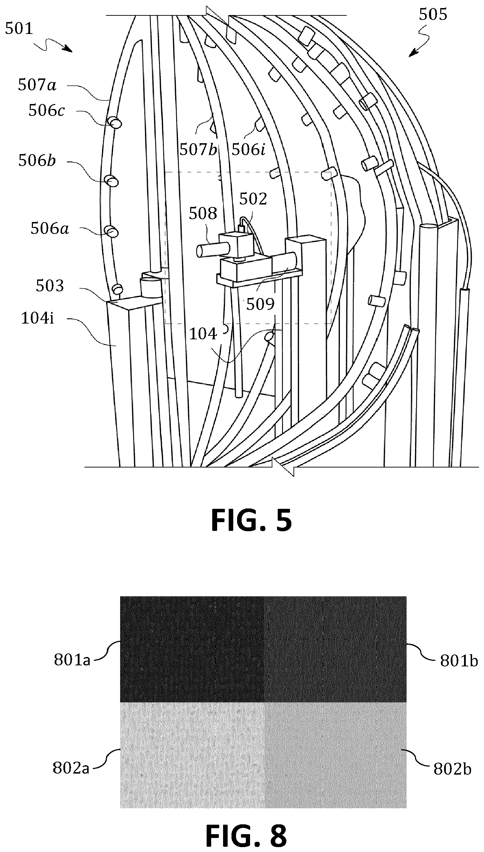

In one embodiment, an acquisition setup is provided that is capable of capturing micro-scale geometry and reflectance, with a particular focus on SVBRDF capture. While any capture system may be used according to this disclosure, in this embodiment a microscopic acquisition is provided with three primary components as illustrated in FIG. 5: an LED light dome 501 which can illuminate the material at different angles, a machine vision camera 502 which captures the material at a microscopic resolution, and a material sample holder 503 in which the physical sample of the material is placed for optical capture. Additionally, a standard Digital Single Lens Reflex ("DSLR") camera 505 (not shown) is placed in the dome structure to capture bigger patches of the material at a lower spatial resolution, which will be useful in the texture transfer method of this embodiment. For additional details on this type of system refer to PCT/ES2019/000016 titled "Micro Scale Image Capture System," incorporated herein by reference in its entirety.

In this embodiment, a sample of a material for which the SVBRDF parameters are to be captured is lighted using a light dome shaped as an hemisphere which contains a number of white LEDs 506, for example between 70 and 100 LEDs 506, uniformly distributed around the azimuth and zenith angles of the material. For each LED 506i, a linear polarizing filter is placed at a fixed position, which allows for the estimation of the SVBRDF parameters. In addition, the light dome 501 also contains LED strips (not shown) placed uniformly around the structural rods 507 of the hemispheric dome 501, which are used to capture the material under diffuse lighting. To capture micro-geometry details of the material sample, a machine vision camera 502 (e.g., a Genie™ Nano C4900 available from Teledyne DALSA of Waterloo, Ontario, Canada) is used, which can capture RGB images with a resolution of 4912 × 3684 pixels. In addition, a lens 508, such as for example a Navitar® MVL50M23 lens available from Navitar Industries, LLC, of Rochester, NY, is attached to the machine vision camera 502. This camera setup yields images of 8.9 × 6.7 mm, with a spatial resolution of 1.8 $\mu m$. The focus of the camera is controlled by translating it along the Z axis, using an electronic motor 509. In front of the lens, a linear polarizer (not shown) capable of rotating to any desired position is placed. The polarizer allows for the separation of the diffuse and specular components of the material. By combining multiple exposures per LED, a high-dynamic-range ("HDR") image is obtained for each light angle and polarization configuration.

Additionally, according to this embodiment, a commercially-available DSLR camera 505, such as for example an EOS 5DS R camera, available from Canon U.S.A., Inc. of Melville, New York, is provided for capturing larger patches of the material. After performing a warping operation to correct the perspective of the digital image, a 4000 × 4000 pixels HDR image is obtained, which contains an 11 × 11 cm patch of the material. This size of image and material sample is suitable for creating texture maps that are useable by rendering engines for computer graphics applications.

According to this embodiment, the capture setup is able to obtain high-resolution micro-scale geometry and reflectance measurements from trade-offs that need to be thought of, such as the amount, type and costs of the LEDs, the cost-effectiveness of the cameras and lenses, etc. By means of computer vision algorithms, the possible artifacts that may arise from defects in the design or construction of the capture device can be omitted or removed. However, linear polarizers in both the camera and the LEDs should be used to obtain an accurate, physically-based, separation of the different parts of the SVBRDF parameters to be captured.

Now referring to FIG. 6, a method for a machine-learning based micro-scale parameter transfer according to this embodiment is provided. A set of images of the material $C_j = \{I_i^p\}$ are captured 601. Each image $I_i^p$ is illuminated by a different light source $i \in S$ and two positions of the polarizer are placed in front of the camera sensor. The horizontal position ($p = 0$) allows all the light having 0 degrees of polarization to pass through. The vertical position ($p = 90$) allows all the light having 90 degrees polarization to pass through. These images have a field of view of 8.9 × 6.7 mm, and a spatial resolution of 1.8 $\mu m$. This set of images $C_j$ can be captured at multiple $j$ locations of the material, creating a data-set of captures $C$. The material sample is then illuminated with diffuse lighting, and a macro-scale image of the material sample is captured 602, for example with a field of view of 110 $\times$ 110 mm, and a spatial resolution of 27 $\mu m$. This image $I^R$ represents an approximation of the reflectance of the surface of the material.

The micro-scale diffuse-specular parameters of the material and its normals are then obtained from these capture sets. For example, as described in Debevec et al. [2000] (incorporated by reference), the diffuse and specular components of the material's appearance are separated by using linear polarizers on the camera and each of the light sources. Due to this separation, the material is assumed to have lambertian properties (thus showing no specular reflections), and the surface normal can be computed using photometric stereo techniques. The use of polarized light and filters to separate diffuse and specular components provides the following: the first bounce of light, i.e. specular reflection, keeps the polarization state of the incoming light, while light that penetrates the material and is subject to multiple light bounces (e.g. single and multiple scattering) will leave the surface depolarized. Thus, the diffused albedo $\alpha$ can be computed 603 as the sum of several images $I_i^p$ captured under a predefined set of lights $i \in \hat{S}$ and camera polarizer angles. To do so, the specular reflections are blocked by placing the linear polarizer on the camera at the horizontal position, and the linear polarizer on each of our light sources at the angle that minimizes specular reflections, so that $I_i^d = I_i^0$. The diffuse albedo $\alpha \in \Re 3$ is thus computed 603 based on Equation 4:

$$\alpha = \sum_{i \in \hat{s}} I_i^d \qquad \text{[Eq. 4]}$$

Note that the polarizer in front of the sensor blocks half of the incoming radiance. In order to obtain the full radiance, we need to sum the images captured from orthogonal positions of the polarizer, $I_i^r = I_i^0 + I_i^{90}$.

According to embodiments, one or more property maps for the material can be computed 604. For example, to compute 604 a specular map, the polarization filter that is placed on the camera is rotated by 90 degrees to obtain images with specular reflectance $I_i^{90}$. In this configuration, the filter at the camera is only blocking half of the subsurface scattering which is depolarized when leaving the material. The difference between $I_i^{90}$ and $I_i^0$, images with orthogonal polarizations, yields the specular component associated with each light direction $i$, $I_i^S = I_i^{90} - I_i^0$. The specular map can be then estimated initially as $k_S \in \Re 2$, which is the sum of the specular components computed based on Equation 5:

$$k_S = \sum_{i \in \hat{s}} I_i^S \qquad \text{[Eq. 5]}$$

As another example, a roughness map can also be computed 604. To initialize the roughness map, we simply compute the inverse of the specular map, by:

$$k_R = 1 - k_S \qquad \text{[Eq. 6]}$$

Further, given the same set of images with only diffuse reflectance $\{I_i^d | i \in \hat{S}\}$ that were used to compute the albedo color of the material, the photometric normal map of the material can also be computed 604. The surface normal can be computed 604, for example, using the Photometric Stereo method [*see* Woodham 1980]. Under the assumption of lambertian reflectance, the diffuse reflectance $I_i^d$ can be computed as the product of light $i$ in 3D coordinates and the surface normal n: $I_i^0 = i \cdot n$. The surface normals are thus computed by inverting the previous equation, resulting in Equation 7:

$$n = (L^T L)^{-1} L^T I^d \qquad \text{[Eq. 7]}$$

For illustrative purposes, an example of computed normal and base color maps according to this embodiment are illustrated in FIG. 7. FIG. 7 illustrates a computed albedo map 701 and normal map 702 of a denim fabric according to this embodiment, which assumes the surface is lambertian under certain polarization conditions.

The computed maps may be adjusted so they match the appearance of the material more accurately, by means of an optimization 605 procedure. This optimization algorithm can further modify the maps so as to take into account other factors, such as increasing their local smoothness, for instance. For example, referring to FIG. 8, results of optimization of SVBRDF parameters according to one embodiment are illustrated. FIG. 8 illustrates the optimization of SVBRDF parameters for a sample denim fabric material. A specular map 801a and roughness maps 802a are shown before optimization and a specular map 801b and roughness map 802b are shown after optimization.

Referring back to FIG. 6, a micro-scale texture stack $\omega_j$ is generated 606. The SVBRDF parameters obtained using the method according to this embodiment provides a physically-based, high-resolution representation of a very small patch of a material (for example, less than $1cm^2$). In this embodiment, this material representation becomes the texture stack $\omega_j$ for micro-scale resolution, and it can include, but is not limited to, albedo, normals, roughness, specular, or opacity maps. Having a texture stack of such resolution can be useful for understanding several properties of the material due to its microstructure that are otherwise impossible to observe at a normal viewing range. As noted above, the micro-scale properties are due to microstructures in the 10 to 20 micron range, which typical render-scale imaging systems cannot capture nor can human eyes perceive. Thus, this micro-scale texture stack is of little use for applications of computer graphics that require tiling the texture to fit an object of a bigger scale. For example, one problem that arises with such small textures are repeating artifacts. A potential solution would be to directly capture this data at a bigger scale, such as done by recent methods [Gao et al. 2019], however, details of the micro-geometry would be missing. These details are useful for estimating complex parameters of the material, such as for example, depth, transmittance, or fly-out fibers in fabrics.

Once the micro-scale texture stack $\omega_j$ is generated 608, a deep learning neural network $\mathcal{M}$ can be trained 607. The transfer framework for this embodiment generally follows the specifications for the general framework description of the embodiments described before. One of aspect of this SVBRDF transfer framework embodiment is that it is entirely physically-based. The estimation of the micro-scale texture stack $\omega_j$ computed for each of the captures $Cj = \{ I^r_{i,j} \}$ is done using physically realistic parameters from a real sample of the material and the material data is captured using a fully calibrated setup. The neural network $\mathcal{M}$ is trained only with these physically correct parameters, using only one material sample as input. Accordingly, the result of the transfer algorithm is also physically accurate, in contrast to other SVBRDF models, which hallucinate the texture maps from different materials. Moreover, as ground-truth values for all the maps in $\omega_j$ are obtained in this embodiment, the mean intensity and variance for every map can be computed. These ground-truth-based values can then be exactly transferred to the output maps $\Omega_j$, in part thanks to the standardization approach used in this embodiment. The estimated maps will thus be physically accurate having the same mean and variance values as the ground-truth maps, which are by definition physically accurate.

Referring back to FIG. 6, once the deep learning neural network $\mathcal{M}$ has been trained 607 with the small micro-scale patches of the material, the network can be applied 608 to larger, renderable-scale images $I^R$ of the material. In this SVBRDF embodiment, for materials that are sufficiently homogeneous, the application 608 of neural network $\mathcal{M}$ to an image of a larger patch of the same material $I^R$ transfers the micro-geometry details found in high-resolution texture stack $\omega_j$ into that image. Many real-world materials, like fabrics, show these characteristics. Accordingly, given one or more microscopic captures $Cj = \{ I^r_{i,j} \}$ of a material as well as a micro-scale texture stack $\omega_j$ estimated for each capture, the deep learning neural network $\mathcal{M}$ is able to output 609 the physically correct material property map, S2, of a bigger patch of the same material given a single image as input $I^R$. This input image can be of any size and illumination. The $I^R$ used for as input for this embodiment during the estimation time was taken under controlled conditions (measured and calibrated Camera Response Function, LED intensities, controlled spatial resolution, etc.). This allowed the use of the $I^R$ as an approximation to the albedo image that the SVBRDF model needs. To use $I^R$ images taken from uncontrolled setups (unknown illumination, camera response functions, etc.) such as a smartphone, some changes can be performed to the algorithm to improve its robustness to properties of the input image.

As described above, embodiments of machine learning frameworks according to this disclosure provide standardization and data augmentation policies to increase robustness in transfer performance. For example, even if the color of input images $I^R$ does not exactly match what was captured in the input data set $C$, the transfer network $\mathcal{M}$ is able to learn to ignore those differences and output physically-based material property maps, including for example, as discussed below, realistic yarn segmentation maps. However, several problems may arise when using this transfer setup in uncontrolled situations. One of which is related to geometry shifts or variations in the input renderable-scale image $I^R$. If, for example, the device used to capture the input image $I^R$ is not correctly placed (e.g. the sensor is not coplanar to the material sample), perspective shifts may happen, which may make the transfer work sub-optimally. To address this, data augmentation can be performed so as to make the networks invariant to this kind of problem. Additionally, the color of the input image $I^R$ taken with uncontrolled devices may not be physically accurate, thus preventing the use of this image as the albedo of the SVBRDF texture stack. To address this issue, the SVBRDF estimation framework can be extended. More precisely, the albedo $\alpha_j$ for each $C_j$ patch can be computed and the texture stacks $\omega_j$ can be extended to include those computed albedos $\alpha_j$. The transfer network $\mathcal{M}$ thus learns to estimate the albedo from any image $I^r_{i,j}$, which generalizes when estimating material property maps $\Omega$ given $I^R$.

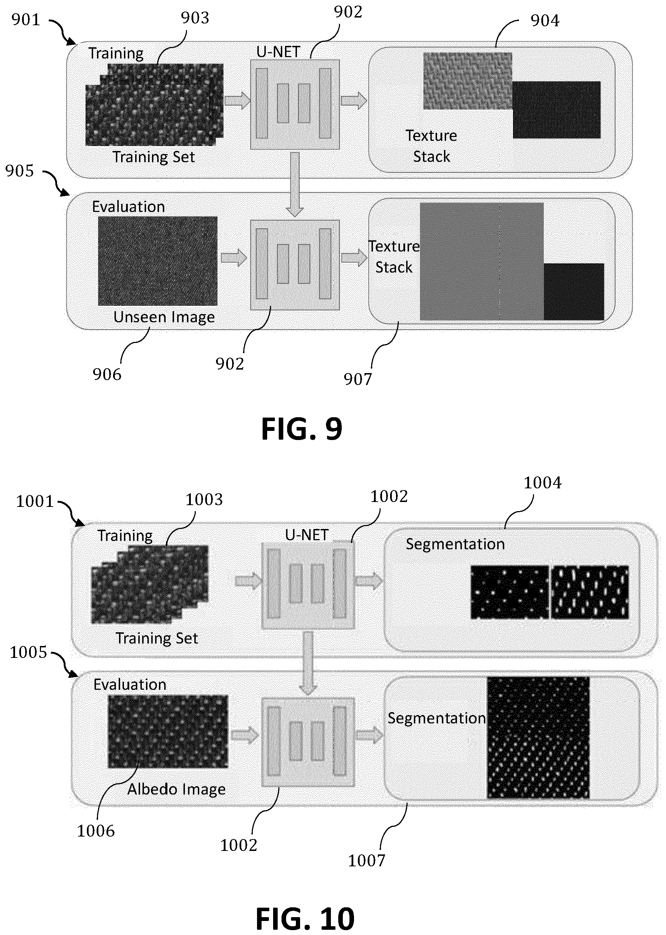

For better performance, the number of microscopic captures $Cj = \{ I^r_{i,j} \}$ and micro-scale texture stacks $\omega_j$ should at least match any number of different areas of heterogeneity that exist in the target image of the material. This would provide a training data set that is representative of all the different properties that may be present in a given material sample. FIG. 9 provides a block diagram illustrating an overview of the texture transfer process according to embodiments. A training block 901 illustrates the training of neural network $\mathcal{M}$ (U-NET) 902 to find a mapping between each of input images $I_d(\theta_l)$ 903 to computed surface normal, roughness and specular maps in micro-scale texture stacks $\omega_j$ 904. Once the training has converged, an evaluation block 905 illustrates the input of the image 906 to neural network $\mathcal{M}$ (U-NET) 902 and the output of the texture stack S2 907, with its normal, roughness and specular and maps.

The material property maps generated using the transfer framework of this disclosure can then be used for any visual computing application that relies on texture maps, or more broadly property maps, of materials for their operation. For example, garment design and virtual modeling, motion capture applications, biomechanics and ergonomics design and simulation, education, business, virtual and augmented reality shopping, and entertainment applications, including animation and computer graphics for digital movies, interactive gaming and videos, human, animal, or character simulations, virtual and augmented reality applications, robotics, computer vision, classification and recognition applications, and the like. For example, in computer graphics, rendering systems use material property maps to realistically model the visual properties of fabrics and other materials on the computer generated graphics of the fabric or material. The generated graphics may be used for on-screen display of images, such as video frames, in all sorts of applications, including virtual reality headsets, computer monitor screens, mobile device screens, and the like. The generated images may be downloaded, streamed, or otherwise transferred from a server-based system to one or more client devices for display. The effect of interaction between the material and the simulated lighting, gravity, and other physical world properties is rendered by the rendering system and displayed based on the material's property maps. These effects include photo-realistic still images, augmented reality videos, virtual reality animations, and all other forms of computer graphics. Similarly, property maps can be used in computer vision applications to recognize specific materials or objects using computer vision.

**Yarn Segmentation Transfer Embodiment**

According to another aspect of the disclosure, the micro-to-macro transfer framework of the embodiments described above can be used in many other scenarios. For example, one such use is for solving the single-image semi-supervised yarn segmentation problem. According to one embodiment, a user provides masks for some of the yarns that appear in a input image and the neural network $\mathcal{M}$ must learn to transfer this segmentation into the rest of the image. Now referring to FIG. 10, a block diagram illustrating an overview of a segmentation transfer process according to this embodiment is shown. A training block 1001 illustrates the training of neural network $\mathcal{M}$ (U-NET) 1002 to find a mapping between a small crop of an input image $I_d(\theta_l)$ 1003 to user-provided yarn segmentations 1004. Once the training has converged, an evaluation block 1005 illustrates the input of an albedo image 1006 to neural network $\mathcal{M}$ (U-NET) 1002 and the output of the segmentation of the yarns of the full albedo image 1007. According to this embodiment, a user provides as input an identification of the segments of the yarn in a small patch $j$ around the center of an input image $I_d$. The neural network $\mathcal{M}$ is trained to map crops of the input image $I_d$ to their corresponding user-provided segmentation. When fully trained, the network is able to segment all the yarns in the image correctly.

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof. These modules may be implemented in server-based systems interacting with client systems over a computer network, such as the Internet, over which the results obtained with the modules are communicated to the client systems for output to users. For example, in computer graphics applications, realistic graphics with modeled materials, such as fabrics, are computed at the servers and communicated to client systems for display. Alternatively, the modules may be implemented in client systems, for example, in design applications or client-based graphics applications, such as for example computer gaming applications.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability. Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following.

## REFERENCES

The following references are incorporated herein for all purposes:

Paul Debevec, Tim Hawkins, Chris Tchou, Haarm-Pieter Duiker, Westley Sarokin, and Mark Sagar. 2000. Acquiring the reflectance field of a human face. In Proceedings of the 27th annual conference on Computer graphics and interactive techniques. 145-156.

Valentin Deschaintre, Miika Aittala, Frédo Durand, George Drettakis, and Adrien Bousseau. 2019. Flexible SVBRDF Capture with a Multi-Image Deep Network. In Computer Graphics Forum, Vol. 38. Wiley Online Library, 1-13.

Yuki Endo, Satoshi Iizuka, Yoshihiro Kanamori, and Jun Mitani. 2016. Deepprop: Extracting deep features from a single image for edit propagation. In Computer Graphics Forum, Vol. 35. Wiley Online Library, 189-201.

Duan Gao, Xiao Li, Yue Dong, Pieter Peers, Kun Xu, and Xin Tong. 2019. Deep inverse rendering for high-resolution SVBRDF estimation from an arbitrary number of images. ACM Transactions on Graphics (TOG) 38, 4 (2019), 1-15.

Phillip Isola, Jun-Yan Zhu, Tinghui Zhou, and Alexei A Efros. 2017. Image-to-image translation with conditional adversarial networks. In Proceedings of the IEEE conference on computer vision and pattern recognition. 1125-1134.

Ali Kamen, Fred S Azar, and John V Frangioni. 2013. Integration of micro and macro information for biomedical imaging. US Patent 8,386,015.

Diederik P Kingma and Jimmy Ba. 2014. Adam: A method for stochastic optimization. arXiv preprint arXiv:1412.6980 (2014).

Hsin-Ying Lee, Hung-Yu Tseng, Jia-Bin Huang, Maneesh Singh, and Ming-Hsuan Yang. 2018. Diverse image-to-image translation via disentangled representations. In Proceedings of the European conference on computer vision (ECCV). 35-51.

Jianxin Lin, Yingce Xia, Tao Qin, Zhibo Chen, and Tie-Yan Liu. 2018. Conditional image-to-image translation. In Proceedings of the IEEE Conference on Computer Vision and Pattern Recognition. 5524-5532.

Min Ni, Jianjun Lei, Runmin Cong, Kaifu Zheng, Bo Peng, and Xiaoting Fan. 2017. Color-guided depth map super resolution using convolutional neural network. IEEE Access 5 (2017), 26666-26672.

Adam Paszke, Sam Gross, Francisco Massa, Adam Lerer, James Bradbury, Gregory Chanan, Trevor Killeen, Zeming Lin, Natalia Gimelshein, Luca Antiga, et al. 1912. PyTorch: An Imperative Style, High-Performance Deep Learning Library.(2019). arXiv preprint arXiv:1912.01703 (1912).

Gernot Riegler, David Ferstl, Matthias Rüther, and Horst Bischof. 2016. A deep primal- dual network for guided depth super-resolution. arXiv preprint arXiv: 1607.08569 (2016).

Mei Wang and Weihong Deng. 2018. Deep visual domain adaptation: A survey. Neuro-computing 312 (2018), 135-153.

Woodham, R.J. 1980. Photometric method for determining surface orientation from multiple images. Optical Engineering 19, I, 139-144.

**Claims**

1. A method for generating a material property map of a computer model of a material for visual computing applications, the method comprising:

   training a machine learning module with a set of micro-scale images of a subsection of a material sample captured under a plurality of different illumination conditions and with a set of one or more micro-scale parameters of the material, the training generating a mapping between a set of image features in the set of micro-scale images and a set of micro-level parameters of the material;
   receiving as input one or more render-scale images of the material;
   processing the one or more render-scale images of the material with the machine learning module to apply the one or more micro-level parameters to at least one of the render-scale images of the material;
   outputting the one or more micro-level parameters of the at least one render-scale image of the material for generating a property map of the material;
   wherein the micro-scale at which the micro-scale images are captured corresponds to a scale with a higher resolution than the render-scale at which the one or more render-scale images are captured.

2. The method of claim 1 further comprising capturing the set of micro-scale images with a micro-scale image capturing system comprising a plurality of controllable light sources.

3. The method of claim 2 wherein the micro-scale image capturing system includes polarizing filters for the plurality of controllable light sources.

4. The method of claim 2 wherein the micro-scale image capturing system further comprises a computer vision camera for capturing the set of micro-scale images.

5. The method of claim 4 wherein the micro-scale image capturing system further comprises a polarizing filter for the computer vision camera for capturing micro-scale images of the set of micro-scale images with orthogonal polarizations.

6. The method of claim 1 wherein a micro-scale material-property map comprises the set of one or more micro-scale parameters of the material and the set of micro-scale images of the subsection of the material sample and further wherein the machine learning module is trained with the micro-scale material-property map.

7. The method of claim 1 further comprising computing the set of one or more micro-scale parameters of the material.

8. The method of claim 1 wherein the one or more micro-scale parameters comprise at least one of: fly-outs, fiber twist, normal maps, warp/weft yarn labeling, yarn segmentation, or SVBRDF model parameters.

9. The method of claim 1 further comprising:

   augmenting the set of micro-scale images by processing the set of micro-scale images to derive an augmented set of micro-scale images, the augmented set of micro-scale images including additional image features different from the set of image features; and
   wherein the training of the machine learning module is performed with the augmented set of micro-scale images.

10. The method of claim 1 further comprising:

   augmenting the set of one or more micro-scale parameters of the material by processing the set of micro-scale parameters of the material to derive an augmented set of micro-scale parameters of the material, the augmented set of one or more micro-scale parameters of the material including additional micro-scale parameters different from the set of one or more micro-scale parameters of the material; and
   wherein the training of the machine learning module is performed with the augmented set of a set of micro-scale parameters of the material.

**11.** The method of claim 1 wherein the machine learning module comprises a convolutional neural network.

**12.** The method of claim 11, wherein the convolutional neural network comprises an encoder and a decoder.

**13.** The method of claim 1, wherein the resolution of the scale that corresponds to the micro-scale at which the micro-scale images are captured is 30 microns or less per pixel.

**14.** The method of claim 1 wherein the render-scale images of the material are taken from the same material sample as the micro-scale images.

**15.** A method for generating a material property map of a computer model of a fabric for computer modeling applications, the method comprising:

training a machine learning module with a set of micro-scale images of a subsection of a sample of the fabric captured under a plurality of different illumination conditions and with a set of one or more micro-scale parameters of the fabric, the training generating a mapping between a set of image features in the set of micro-scale images and a set of micro-level parameters of the fabric;
receiving as input one or more render-scale images of the fabric;
processing the one or more render-scale images of the fabric with the machine learning module to apply the one or more micro-level parameters to at least one of the render-scale images of the fabric;
outputting the one or more micro-level parameters of the at least one render-scale image of the fabric for generating a property map of the fabric for use by a rendering engine;
wherein the micro-scale at which the micro-scale images are captured corresponds to a scale with a higher resolution than the render-scale at which the one or more render-scale images are captured.

**16.** The method of claim 15 wherein the fabric is one of cotton, flax, wool, polyester, or silk.

**17.** The method of claim 15 wherein the set of one or more micro-scale parameters of the fabric comprises at least one of fly-outs, fiber twist, normal maps, warp/weft yarn labeling, yarn segmentation, or SVBRDF model parameters.

**18.** The method of claim 15 wherein the render-scale images of the fabric are taken from the same sample of the fabric as the micro-scale images.

**19.** System for generating a material property map of a computer model of a material for computer modeling applications, the system comprising:

a data processor configured for executing computer instructions; and
data storage for storing computer instructions, the computer instructions when executed by the data processor causing the sytem to:

train a machine learning module with a set of micro-scale images of a subsection of a material sample captured under a plurality of different illumination conditions and with a set of one or more micro-scale parameters of the material, the training generating a mapping between a set of image features in the set of micro-scale images and a set of micro-level parameters of the material;
receive as input one or more render-scale images of the material;
process the one or more render-scale images of the material with the machine learning module to apply the one or more micro-level parameters to at least one of the render-scale images of the material;
output the one or more micro-level parameters of the at least one render-scale image of the material for generating a property map of the material;
wherein the micro-scale at which the micro-scale images are captured corresponds to a scale with a higher resolution than the render-scale at which the one or more render-scale images are captured.

**20.** A computer implemented method for displaying a simulation of one or more items made of a material, the method comprising:
receiving a plurality of frames comprising a simulation of the one or more items made of the material, the plurality of frames rendered by transforming a model of the material based on a property map of the material into a volumetric representation of the items made of the material, the property map of the material generated by:

training a machine learning module with a set of micro-scale images of a subsection of a material sample captured under a plurality of different illumination conditions and with a set of one or more micro-scale parameters of the material, the training generating a mapping between a set of image features in the set of micro-scale images and a set of micro-level parameters of the material;

receiving as input one or more render-scale images of the material;

processing the one or more render-scale images of the material with the machine learning module to apply the one or more micro-level parameters to at least one of the render-scale images of the material;

outputing the one or more micro-level parameters of the at least one render-scale image of the material for generating the property map of the material;

wherein the micro-scale at which the micro-scale images are captured corresponds to a scale with a higher resolution than the render-scale at which the one or more render-scale images are captured.

**FIG. 1**

Input micro-scale
Image set $I_{i,j}^r$
201

↓

Input micro-scale
parameters $\omega_j$
202

↓

Train $\mathcal{M}$
$\mathcal{M}(I_{i,j}^r) = \omega_j$
203

↓

Input render-scale
Image $I^R$
204

↓

Apply $\mathcal{M}$ to $I^R$
$\mathcal{M}(I^R) = \Omega$
205

↓

Output micro-scale
parameters $\Omega$
applicable to $I^R$
206

## FIG. 2

obtain micro-scale
Image set $I_{i,j}^r$
301

↓

Input micro-scale
parameters $\omega_j$
302

↓

Train $\mathcal{M}$
$\mathcal{M}(I_{i,j}^r) = \omega_j$
303

↓

obtain render-scale
Image $I^R$
304

↓

Apply $\mathcal{M}$ to $I^R$
$\mathcal{M}(I^R) = \Omega$
305

↓

Output micro-scale
parameters $\Omega$
applicable to $I^R$
306

## FIG. 3

Capture polarized
micro-scale Image set
$I_i^p = \{I_i^0, I_i^{90}\}$
601

↓

Capture diffused
lighting
render-scale Image $I^R$
602

↓

Compute diffuse albedo
$\alpha = \sum_{i \in \hat{s}} I_i^d$
603

↓

Compute one or more
maps
604

↓

Optimize one or more
maps
605

↓

Generate micro-scale
texture stack $\omega_j$
606

↓

Train $\mathcal{M}$
$\mathcal{M}(I_{i,j}^r) = \omega_j$
607

↓

Apply $\mathcal{M}$ to $I^R$
$\mathcal{M}(I^R) = \Omega$
608

↓

Output $I^R$ texture map
$\Omega$
609

## FIG. 6

```
┌──────────────────────┐          ┌──────────────────────┐
│   Input micro-scale  │          │  Augment micro-scale │
│   Image set $I^r_{i,j}$│ ───────▶ │   Image set $I^r_{i',j}$│
│         401          │          │        401A          │
└──────────────────────┘          └──────────────────────┘
           │                                 
           ▼                                 
┌──────────────────────┐          ┌──────────────────────┐
│   Input micro-scale  │          │  Augment micro-scale │
│  parameters $\omega_j$│ ───────▶ │  parameters $\omega'_j$│
│         402          │          │        402A          │
└──────────────────────┘          └──────────────────────┘
           │                                 │
           │        ┌──────────────────────┐ │
           │        │       Train $\mathcal{M}$   │ │
           └──────▶ │   $\mathcal{M}(I^r_{i',j}) = \omega'_j$│ ◀──────┘
                    │         403          │
                    └──────────────────────┘
                               │
                               ▼
                    ┌──────────────────────┐
                    │   Input render-scale │
                    │     Image $I^R$      │
                    │         404          │
                    └──────────────────────┘
                               │
                               ▼
                    ┌──────────────────────┐
                    │   Apply $\mathcal{M}$ to $I^R$ │
                    │   $\mathcal{M}(I^R) = \Omega$ │
                    │         405          │
                    └──────────────────────┘
                               │
                               ▼
                    ┌──────────────────────┐
                    │  Output micro-scale  │
                    │   parameters $\Omega$ │
                    │  applicable to $I^R$ │
                    │         406          │
                    └──────────────────────┘
```

# FIG. 4

701                                                                702

# FIG. 7

501
505

507a
506c

506b

506a

503
104i

507b 506i

508 502

509

104

FIG. 5

801a
801b

802a
802b

FIG. 8

**FIG. 9**

**FIG. 10**

# EP 4 156 110 A1

## INFORME DE BÚSQUEDA INTERNACIONAL

| Solicitud internacional N° |
|---|
| PCT/ES2020/070336 |

**A. CLASIFICACIÓN DEL OBJETO DE LA SOLICITUD**

INV. G06T11/00

De acuerdo con la Clasificación Internacional de Patentes (CIP) o según la clasificación nacional y CIP.

**B. SECTORES COMPRENDIDOS POR LA BÚSQUEDA**

Documentación mínima buscada (sistema de clasificación seguido de los símbolos de clasificación)

G06T

Otra documentación consultada, además de la documentación mínima, en la medida en que tales documentos formen parte de los sectores comprendidos por la búsqueda

Bases de datos electrónicas consultadas durante la búsqueda internacional (nombre de la base de datos y, si es posible, términos de búsqueda utilizados) EPO-Internal, WPI Data

**C. DOCUMENTOS CONSIDERADOS RELEVANTES**

| Categoría* | Documentos citados, con indicación, si procede, de las partes relevantes | Relevante para las reivindicaciones N° |
|---|---|---|
| X | US 2019/347526 A1 (SUNKAVALLI KALYAN [US] ET AL) 14 de Noviembre de 2019 (2019-11-14) | 1,6-8, 11,12, 14-20 |
| Y | resumen<br>párrafo [0055] | 2-5,13 |
| A | párrafo [0066]<br>párrafo [0091] - párrafo [0093]<br>párrafo [0178] - párrafo [0180]<br>figuras 1 ,2a | 9,10 |

-----

-/--

| [X] En la continuación del Recuadro C se relacionan otros documentos | [X] Los documentos de familias de patentes se indican en el Anexo |
|---|---|

| * Categorías especiales de documentos citados: | "T" documento ulterior publicado con posterioridad a la fecha de presentación internacional o de prioridad que no pertenece al estado de la técnica pertinente pero que se cita por permitir la comprensión del principio o teoría que constituye la base de la invención. |
|---|---|
| "A" documento que define el estado general de la técnica no considerado como particularmente relevante. | |
| "E" solicitud de patente o patente anterior pero publicada en la fecha de presentación internacional o en fecha posterior. | |
| "L" documento que puede plantear dudas sobre una reivindicación de prioridad o que se cita para determinar la fecha de publicación de otra cita o por una razón especial (como la indicada). | "X" documento particularmente relevante; la invención reivindicada no puede considerarse nueva o que implique una actividad inventiva por referencia al documento aisladamente considerado. |
| "O" documento que se refiere a una divulgación oral, a una utilización, a una exposición o a cualquier otro medio. | "Y" documento particularmente relevante; la invención reivindicada no puede considerarse que implique una actividad inventiva cuando el documento se asocia a otro u otros documentos de la misma naturaleza, cuya combinación resulta evidente para un experto en la materia. |
| "P" documento publicado antes de la fecha de presentación internacional pero con posterioridad a la fecha de prioridad reivindicada. | |
| | "&" documento que forma parte de la misma familia de patentes. |

| Fecha en que se ha concluido efectivamente la búsqueda internacional. | Fecha de expedición del informe de búsqueda internacional |
|---|---|
| 5 February 2021 | 16/02/2021 |

| Nombre y dirección postal de la Administración encargada de la búsqueda internacional | Funcionario autorizado |
|---|---|
| European Patent Office, | |
| N° de fax | N° de teléfono |

Formulario PCT/ISA/210 (segunda hoja) (Enero 2015)

## INFORME DE BÚSQUEDA INTERNACIONAL

Solicitud internacional N°

PCT/ES2020/070336

| C (continuación). | DOCUMENTOS CONSIDERADOS RELEVANTES | |
|---|---|---|
| Categoría* | Documentos citados, con indicación, si procede, de las partes relevantes | Relevante para las reivindicaciones N° |
| Y | GILJ00 NAM ET AL: "Simultaneous acquisition of microscale reflectance and normals" , ACM TRANSACTIONS ON GRAPHICS, ACM, NY, US, vol . 35, no. 6, 11 Noviembre de 2016 (2016-11-11), pages 1-11, XP058306319, ISSN: 0730-0301, D0I: 10.1145/2980179.2980220 resumen páginas 4,5<br>----- | 2-5,13 |
| A | GAO DUAN GAO-D170MAILS TSINGHUA EDU CN ET AL: "Deep inverse rendering for high-resolution SVBRDF estimation from an arbitrary number of images", ACM TRANSACTIONS ON GRAPHICS, ACM, NY, US, vol . 38, no. 4, 12 de Julio de 2019 (2019-07-12), pages 1-15, XP058452157, ISSN: 0730-0301, D0I: 10.1145/3306346.3323042 todo el documento<br>----- | 1-20 |
| A | GIUSEPPE CLAUDIO GUARNERA ET AL: "BxDF material acquisition, representation, and rendering for VR and design", 20191117; 20191117 - 20191120, 17 Noviembre de 2019 (2019-11-17), pages 1-21, XP058444214, D0I : 10.1145/3355047.3362092 ISBN: 978-1-4503-6941-1 todo el documento<br>----- | 1-20 |

Formulario PCT/ISA/210 (continuación de la segunda hoja) (Enero 2015)

**INFORME DE BÚSQUEDA INTERNACIONAL**

Información relativa a miembros de familias de patentes

Solicitud internacional Nº

PCT/ES2020/070336

```
US 2019347526    A1    14-11-2019    Ninguno
-------------------------------------------------------------------
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2019000016 W

- US 8386015 B, Ali Kamen, Fred S Azar, and John V Frangioni

### Non-patent literature cited in the description

- **PAUL DEBEVEC ; TIM HAWKINS ; CHRIS TCHOU ; HAARM-PIETER DUIKER ; WESTLEY SAROKIN ; MARK SAGAR.** Acquiring the reflectance field of a human face. *Proceedings of the 27th annual conference on Computer graphics and interactive techniques,* 2000, 145-156
- Flexible SVBRDF Capture with a Multi-Image Deep Network. **VALENTIN DESCHAINTRE ; MIIKA AITTALA ; FRÉDO DURAND ; GEORGE DRETTAKIS ; ADRIEN BOUSSEAU.** Computer Graphics Forum. Wiley Online Library, 2019, vol. 38, 1-13
- Deepprop: Extracting deep features from a single image for edit propagation. **YUKI ENDO ; SATOSHI IIZUKA ; YOSHIHIRO KANAMORI ; JUN MITANI.** Computer Graphics Forum. Wiley Online Library, 2016, vol. 35, 189-201
- **DUAN GAO ; XIAO LI ; YUE DONG ; PIETER PEERS ; KUN XU ; XIN TONG.** Deep inverse rendering for high-resolution SVBRDF estimation from an arbitrary number of images. *ACM Transactions on Graphics (TOG),* 2019, vol. 38 (4), 1-15
- **PHILLIP ISOLA ; JUN-YAN ZHU ; TINGHUI ZHOU ; ALEXEI A EFROS.** Image-to-image translation with conditional adversarial networks. *Proceedings of the IEEE conference on computer vision and pattern recognition,* 2017, 1125-1134
- **DIEDERIK P KINGMA ; JIMMY BA.** Adam: A method for stochastic optimization. *arXiv preprint arXiv:1412.6980,* 2014

- **HSIN-YING LEE ; HUNG-YU TSENG ; JIA-BIN HUANG ; MANEESH SINGH ; MING-HSUAN YANG.** Diverse image-to-image translation via disentangled representations. *Proceedings of the European conference on computer vision (ECCV),* 2018, 35-51
- **JIANXIN LIN ; YINGCE XIA ; TAO QIN ; ZHIBO CHEN ; TIE-YAN LIU.** Conditional image-to-image translation. *Proceedings of the IEEE Conference on Computer Vision and Pattern Recognition,* 2018, 5524-5532
- **MIN NI ; JIANJUN LEI ; RUNMIN CONG ; KAIFU ZHENG ; BO PENG ; XIAOTING FAN.** Color-guided depth map super resolution using convolutional neural network. *IEEE Access,* 2017, vol. 5, 26666-26672
- **ADAM PASZKE ; SAM GROSS ; FRANCISCO MASSA ; ADAM LERER ; JAMES BRADBURY ; GREGORY CHANAN ; TREVOR KILLEEN ; ZEMING LIN ; NATALIA GIMELSHEIN ; LUCA ANTIGA et al.** PyTorch: An Imperative Style, High-Performance Deep Learning Library.(2019). *arXiv preprint arXiv:1912.01703,* 1912
- **GERNOT RIEGLER ; DAVID FERSTL ; MATTHIAS RÜTHER ; HORST BISCHOF.** A deep primal- dual network for guided depth super-resolution. *arXiv preprint arXiv: 1607.08569,* 2016
- **MEI WANG ; WEIHONG DENG.** Deep visual domain adaptation: A survey. *Neuro-computing,* 2018, vol. 312, 135-153
- **WOODHAM, R.J.** Photometric method for determining surface orientation from multiple images. *Optical Engineering,* 1980, vol. 19, 139-144